# EUROPÄISCHE PATENTSCHRIFT

(11) **EP 0 458 046 B1**
(45) Veröffentlichungstag und Bekanntmachung des Hinweises auf die Patenterteilung: **12.03.1997**
(21) Anmeldenummer: 91105505.1
(22) Anmeldetag: 08.04.1991
(51) Int. Cl.: H04M 1/03, H04R 1/22

(54) **Handapparat für Fernsprechapparate**
Handset for telephone apparatus
Combiné pour poste téléphonique

(30) Priorität: 25.05.1990 DE 4016879
(43) Veröffentlichungstag der Anmeldung: 27.11.1991
(73) Patentinhaber: Hagenuk Telecom GmbH, 24118 Kiel (DE)
(72) Erfinder: Constantin, Hermann, Dipl.-Ing., W-2315 Kirchbarkau (DE); Bern, Gusella, W-2309 Honigsee (DE)
(74) Vertreter: Hansmann, Dierk, Dipl.-Ing.

(56) Entgegenhaltungen:
- EP-A- 0 153 819
- CH-A- 659 749
- DE-A- 2 309 978
- FR-A- 2 545 302
- US-A- 4 773 091

## Beschreibung

Die Erfindung betrifft einen Handapparat für Fernsprechapparate nach dem Oberbegriff des Anspruches 1.

Anordnungen dieser Art sind beispielsweise aus der DE-A-23 09 978 bekannt. Bei der konstruktiven Auslegung der Handapparate sind zum einen vorbestimmte Empfindlichkeiten für die Hör- und Sprechkapseln einzuhalten, darüber hinaus ist aber für die Qualität des Übertragungsverhaltens entscheidend, welche Umlaufdämpfung realisiert werden soll. Diese Umlaufdämpfung ist ein Maß dafür, welcher Anteil des von der Hörkapsel ausgesandten Schalls die Sprechkapsel erreicht. Bei einer unzureichenden Umlaufdämpfung treten Rückkopplungen auf, die zu Pfeifgeräuschen führen können. Derartige Rückkopplungen sind insbesondere dann zu befürchten, wenn der Handapparat auf einer harten Platte abgelegt wird, da im Bereich dieser Platte eine erhebliche Schallreflexion zwischen Handapparat und Auflage auftritt. Eine Rückkopplung kann darüber hinaus zur Folge haben, daß der Fernsprechverkehr auf Nachbarleitungen des dem Handapparat zugeordneten Fernsprechapparates gestört wird. In digitalen Fernsprechnetzen kann durch die Rückkopplung ein Echo entstehen, daß das Klangbild verfälscht und die Verständlichkeit ungünstig beeinflußt.

Sowohl bei der Vorrichtung gemäß der DE-A-23 09 987 als auch bei Vorrichtungen entsprechend der DE-A-24 - 40 899 und der DE-A-20 61 692 sind Dichtungselemente vorgesehen, die zu einer weitgehend luftdichten Verbindung der Hör- und Sprechkapseln mit dem Gehäuse verwendet werden. Diese weitgehend luftdichte Lagerung der Kapseln im Bereich des Gehäuses beeinträchtigt die zielbare Umlaufdämpfung, da die gesamte Schallenergie zur Rückkopplung über die Umgebung zur Verfügung steht.

Auch nach der EP-A-0153819 ist es bekannt, scheibenartige Zwischenstücke anzuordnen, die eine Abdichtung zwischen Kapsel und Gehäuse durch den eingesetzten geschlossenen Kunststoff gewährleisten und deshalb auch als akustische Dichtungen bezeichnet werden. Es ist somit bekannt, einen schalldichten undurchlässigen Kunststoff zu verwenden.

Aufgabe der vorliegenden Erfindung ist es daher, einen Handapparat der gattungsgemäßen Art derart zu verbessern, daß eine ausreichende Umlaufdämpfung ohne Beeinträchtigung des äußeren Erscheinungsbildes des Handapparates gewährleistet wird.

Diese Aufgabe wird erfindungsgemäß mit den Merkmalen des Patentanspruches 1 gelöst.

Durch das schalldämpfende Zwischenstück entsteht ein akustischer Nebenschluß, der die Umlaufdämpfung erhöht. Der in den Innenraum des Handapparates abgeleitete Schall kann die abgedichtete Sprechkapsel nicht mehr erreichen. Durch den speziellen akustischen Widerstand der Öffnung wird gewährleistet, daß die die Übertragungsqualität charakterisierende Frequenzkurve nicht oder zumindest nur unwesentlich beeinflußt wird.

Die Anordnung des schalldämpfenden Zwischenstückes im Bereich der Hörkapsel vermeidet eine Beeinträchtigung des äußeren Erscheinungsbildes des Handapparates. Das schalldämpfende Zwischenstück ist von außen nicht erkennbar und wird somit von einem Betrachter des Handapparates nicht als störend für die Formgebung empfunden.

Gemäß einer bevorzugten Ausführungsform ist vorgesehen, daß das schalldämpfende Zwischenstück als eine Schaumstoffeinlage ausgeführt ist. Alternativ hierzu kann das schalldämpfende Zwischenstück durch Ausnehmungen im Bereich der Auflage gebildet werden, die eine Rauhigkeit von etwa 1/100 mm aufweisen.

In der Zeichnung sind Ausführungen der Erfindung schematisch dargestellt. Es zeigen:
- Fig. 1:: eine Schnittdarstellung durch einen Handapparat im Bereich der Hörkapsel mit einem schalldämpfenden Zwischenstück als Schaumstoffeinlage gemäß der Linie I-I der Fig. 2,
- Fig. 2:: eine Draufsicht gemäß Fig. 1,
- Fig. 3:: eine weitere Schnittdarstellung gemäß Fig. 1 mit einem schalldämpfenden Zwischenstück durch eine aufgerauhte Auflage.

Der dargestellte Handapparat eines Fernsprechapparats besteht im wesentlichen aus einem Gehäuse (1), das in seinen Endbereichen Hohlräume (5) mit Schalldurchtrittsöffnungen (9) für den Luftschall aufweist. Die Hohlräume (5) nehmen Kapseln (3) auf, die als Hörkapsel und Sprechkapsel ausgebildet sind. Die Kapseln (3) werden am Gehäuse (1) über Auflagen (4) aufgenommen. Hierbei wird die Kapsel (3) etwa mittig durch einen Haltering (7) mit mehreren Stegen (2) mechanisch gehalten. Zur Versteifung des Gehäuses (1) sind Rippen (8) angeordnet. Ferner ist eine Verschraubungsbohrung (10) für die beiden Gehäuseteile (1) des Handapparates dargestellt.

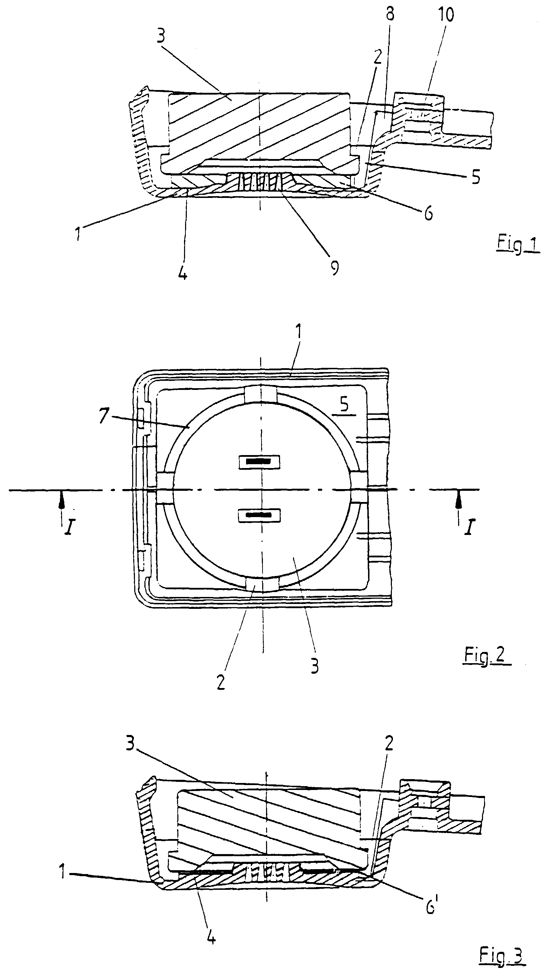

Zwischen Hörkapsel (3) und Auflage (4) ist ein schalldämpfendes Zwischenstück (6) eingelegt. Dieses ist gemäß Fig. 1 als Schaumstoffeinlage ausgeführt. Alternativ ist gemäß Fig. 3 vorgesehen, die Schaumstoffeinlage durch Aufrauen der Auflage (6') zu ersetzen.

Die Verwendung von Schaumstoffeinlagen (6) ist nicht nur bei der Konstruktion von neuen Handapparaten möglich. Die Schaumstoffeinlagen (6) können vielmehr als Nachrüstsatz für bereits existierende Handapparate vorgesehen werden.

Durch die Anordnung der akustisch gedämpften Öffnung im Bereich der Auflage (4) ist es möglich, die Umlaufdämpfung um etwa 4 bis 5 dB zu erhöhen.

## Patentansprüche

1. Handapparat für Fernsprechapparate, mit jeweils über entkoppelnde Auflagen (4) mit jeweils einem ringförmigen Zwischenstück (6) aufgenommener Sprechkapsel und Hörkapsel (3), die in einem als Hohlkörper ausgebildeten Gehäuse (1) angeordnet sind, das eine mit der Umgebung verbundende Schalldurchtrittsöffnung (9) aufweist, dadurch gekennzeichnet, daß das gesamte Zwischenstück (6) zwischen Auflage (4) und Hörkapsel (3) als schalldämpfendes Zwischenstück (6) eine für den Luftschall durchlässige, gedämpfte Öffnung bildet, die als akustischer Widerstand im Nebenschluß derart bemessen ist, daß die das Übertragungsverhalten charakterisierende Frequenzkurve mit vernachlässigbaren Abweichungen erhalten bleibt.

2. Handapparat nach Anspruch 1, dadurch gekennzeichnet, daß das schalldämpfende Zwischenstück (6) als eine Schaumstoffeinlage ausgeführt ist.

3. Handapparat nach Anspruch 1 oder 2, dadurch gekennzeichnet, daß das schalldämpfende Zwischenstück (6) durch Ausnehmungen (6') im Bereich der Auflage (4) gebildet ist, die eine Rauhigkeit von etwa 1/100 mm aufweisen.

## Claims

1. A handset for telephones, in each case with the transmitter capsule and receiver capsule (3) supported by means of de-coupling seats (4), in each case with an annular intermediate piece (6), the capsules being arranged in a casing (1) in the form of a hollow body (1) which has an opening (9) connected to the outside for the passage of sound, characterised in that the complete intermediate piece (6) between the seat (4) and the receiver capsule (3), being a sound-deadening intermediate piece (6), forms a deadened opening transmitting airborne sound, the opening being a shunted acoustic resistance of a magnitude such that the frequency curve characterising the transmission behaviour is still maintained with negligible deviations.

2. A handset according to claim 1, characterised in that the sound-deadening intermediate piece (6) is in the form of a foam insert.

3. A handset according to claim 1 or 2, characterised in that the sound-deadening intermediate piece (6) is formed by recesses (6') in the region of the seat (4), which have a roughness of approximately 1/100 mm.

## Revendications

1. Combiné pour postes téléphoniques qui comporte un transmetteur et un écouteur (3) placés respectivement sur des support à désaccouplement (4) avec des pièces intercalaires annulaires respectives (6), transmetteur et écouteur qui sont montés dans un boîtier (1) prévu sous la forme d'un corps creux et présentant une ouverture de passage du son (9) qui est en communication avec l'atmosphère environnante, le combiné étant caractérisé en ce que la pièce complète intercalaire (6) qui se trouve entre le support (4) et l'écouteur (3), en tant que pièce intercalaire (6) d'amortissement du son, forme une ouverture d'amortissement qui laisse passer les sons transmis par l'air, ouverture qui, en tant que résistance acoustique dans le circuit de dérivation, a été prévue de dimension telle que la courbe de fréquence qui caractérise le comportement de transmission reste obtenue avec des écarts de tolérances négligeables.

2. Combiné suivant le revendication 1, caractérisé en ce que la pièce intercalaire d'amortissement du son (6) a été prévue sous la forme d'une insertion continue faite de matière cellulaire.

3. Combiné suivant l'une ou l'autre des revendications 1 et 2 caractérisé en ce que la pièce intercalaire d'amortissement du son (6) est formée par des ouvertures (6') prévues dans la région du support (4), ouvertures (6') qui déterminent une rugosité d'environ 1/100 mm.
